Europäisches Patentamt

European Patent Office

Office européen des brevets

(11) Publication number: **0 145 307**
A2

# EUROPEAN PATENT APPLICATION

(21) Application number: **84307828.8**

(22) Date of filing: **13.11.84**

(51) Int. Cl.⁴: **H 01 B 13/22**
**H 01 B 13/30**

(30) Priority: **14.11.83 US 551376**

(43) Date of publication of application:
**19.06.85 Bulletin 85/25**

(84) Designated Contracting States:
**AT BE CH DE FR GB IT LI NL SE**

(71) Applicant: **RAYCHEM CORPORATION**
**300 Constitution Drive**
**Menlo Park California 94025(US)**

(72) Inventor: **Stine, Carl Michael**
**1408 Middlefield Road Apt. D**
**Redwood City California 94063(US)**

(74) Representative: **Jones, David Colin et al,**
**Raychem Limited Intellectual Property Law Department**
**Swan House 37-39 High Holborn**
**London WC1(GB)**

(54) **Cable blocking.**

(57) A gas-tight block is provided in multiconductor cables by separating a plurality of inner conductors in the centre region of the cable from the outer conductors in the outer region of the cable, applying a hot-melt adhesive or a gel around each of the inner conductors, installing a first recoverable polymeric sleeve around the inner conductors, arranging the outer conductors around the circumference of the installed sleeve. Additional concentric sleeves can be installed over repeated layers of conductors in cables having a large number of conductors. The resulting blocked cable can be used in hazardous areas where migration of gases from a hazardous area must be prevented.

This invention relates to a method of blocking a cable having a plurality of conductors.

In some locations a cable passes through a bulkhead or wall from a gaseous hazardous area into a normal harmless environment. The hazardous area can contain toxic fumes, flammable gases or the like. In some instances it is required that the cable be blocked at the point where it leaves the hazardous area so that any gas that might have penetrated the cable jacket into the core of the cable is blocked from migrating through the core of the cable into the normal environment. Cables having a plurality of conductors include such cables as electrical control cables, electrical communication cables, fibre optic cables and the like. The individual conductors are isolated from each other typically by a polymeric insulation layer surrounding the individual conductors. For the sake of simplicity, use of the term "conductor" in this application refers to the conductor and insulation layer.

Cables containing relatively few conductors, e.g. containing less than about 6 conductors, can readily be blocked by placing hot-melt adhesive around the individual conductors and installing a heat recoverable sleeve around the cable. Heat required to shrink the sleeve melts the adhesive so that it flows and fills all the interstices between the conductors. When the adhesive cools it solidifies forming a block in the cable effectively stopping flow of gas out of the hazardous area.

This technique has been found to be ineffective for cables containing a larger number of individual conductors, for example cables containing more than about 20 conductors. Attempts to produce a cable block by this technique fail to achieve a gas-tight block in such cables.

It is an object of the present invention to provide a method of blocking a cable that is not only effective at blocking a small number of conductors, but that is also effective at blocking a cable having a larger number of conductors.

One aspect of this invention accordingly comprises a method of forming a substantially gas-tight block in a cable having a plurality of conductors, which method comprises: separating a plurality of conductors in an inner region of the cable from conductors in an outer region of the cable; applying a hot-melt adhesive or a gel around each of the inner conductors; installing a first heat shrinkable polymeric sleeve around the inner conductors; arranging the outer conductors around the circumference of the first polymeric sleeve; applying a hot-melt adhesive or a gel around each of the outer conductors; and installing a second recoverable polymeric sleeve around the outer conductors concentric with the first polymeric sleeve.

Another aspect of this invention comprises a cable having a plurality of conductors, said cable being provided with a gas-tight block, said block comprising: an adhesive or a gel around each of the conductors; a first polymeric sleeve around a plurality of conductors located in an inner region of the cable; and a second polymeric sleeve concentric with the first polymeric sleeve and surrounding the conductors in an outer region of the cable.

Cables having a plurality of conductors are used, for example, as multiconductor electrical power cables, control cables for electrical apparatus, combination electrical power and control cables, communication cables, including copper wire cables and fibre optic cables, and the like.

As mentioned above, cables having a relatively few conductors can be provided with a cable block using a hot-melt adhesive and a single heat shrinkable sleeve. However, this method is ineffective for cables having a plurality of conductors. It is to blocking these cables that this invention is particularly, though not exclusively, directed. The number of conductors of a cable which cannot be blocked by the prior art method depends on the size of the conductor. For example, cables having No. 12 gauge conductor containing up to about 20 conductors can be blocked by the prior art method. On the other hand, a combination electric power and control cable containing three No 2 gauge power conductors surrounded by seven control conductors cannot be blocked by the prior art method. This invention is thus particularly, though not exclusively, directed to forming a gas-tight block in a cable having a plurality of conductors where because of the number or size of conductors the prior art method cannot be used.

Cables having a plurality of conductors typically have insulation, and frequently insulation and electrical shielding, around the individual conductors. An outer protective jacket surrounds the cable. The jacket generally comprises a polymeric sheath extending the length of the cable. The region of the cable within the outer sheath is referred to as the core of the cable. The cable core may be filled with air or other medium.

In the event that there is damage to the outer sheath of the cable, air and other gaseous medium surrounding the cable can diffuse into the cable core and along the length of the cable core. When the cable is located in a hazardous area containing toxic fumes, inflammable gases or the like, such materials can enter the core of the cable through cuts in the cable sheath and at times can diffuse through the undamaged outer sheath. Once such gaseous substrates enter the cable core they rapidly migrate through the core of the cable unless blocked from doing so. The method of this invention can be utilized to provide a gas-tight block in cables having a plurality of conductors.

The cable block is preferably placed in the cable as close as practical to the bulkhead or wall through which it passes from a hazardous to a non-hazardous or normal environment. The block can be installed at the end of a cable, for example, where it is terminated at a piece of equipment or can be installed in line at an appropriate point in the cable.

The cable block is effected by first removing the outer sheath of the cable. The conductors in the inner, for example centre, region of the cable are separated from those in the outer region. A hot-melt adhesive or a gel is then positioned around each of the individual inner conductors. The adhesive or gel can be applied in any appropriate form, such as a putty, tape, individual sleeves which are separately wound around each conductor, and the like.

The hot-melt adhesive can be any hot-melt adhesive typically used to adhere a repair sleeve or splice enclosure to the outer jacket of a cable. The term hot-melt adhesive is used in the generic sense to mean any material which in heating melts and flows and on cooling solidifies and adheres to the conductors and polymeric sleeves used in preparing the block.

Preferably, the hot-melt adhesive has a melt flow index (measured under a 2160 gram load) at 90°C of greater than about 6.5 decigrams per minute and at 80°C of less than about 3 decigrams per minute. Typically, the adhesive has a melt flow index at 90°C between about 6.5 and about 15 decigrams per minute, most preferably between about 6.5 and about 8.5 decigrams per minute and at 80°C between about 1.2 and about 3.0 decigrams per minute; most preferably between about 1.5 and about 2.2 decigrams per minute.

The gels useful for the invention can be any gel that adheres to the sleeve, to the cables and that does not flow at use temperatures.

Gel compositions are well known and those which are useful in the invention, i.e., comprising the adhesion and flow properties described above, can be readily determined by one skilled in the art. For example, in US Patent No. 3,425,967, incorporated herein by reference, silicone-type gels are described. These silicone gels show thermal insulating properties and are useful with electrical devices. Gels useful for the invention are also described in US Serial No. 646,555, incorporated herein by reference, which are non-silicone gels made from a liquid rubber with low saturation which has been crosslinked. Also, in EPC Patent Application No. 83,306,140.1 (Publication No.108518), incorporated herein by reference, gels are described which have cone penetration values of at least 100 and an elongation of at least 200%.

The recoverable sleeves may be heat shrinkable or of the non-thermal recoverable type. A heat shrinkable sleeve can be in tubular form which is readily installed if the block is formed at the cable termination or it can be a wraparound sleeve, that is a heat shrinkable sleeve held together along the longitudinal edges by an appropriate fastening mechanism. It is preferred that a relatively flat closure mechanism be employed with a wraparound sleeve. For example, the closure can be an appropriate contact or pressure sensitive adhesive positioned on the longitudinal edges of the sleeve. Another relatively flat closure is a longitudinal strip or patch which can be applied over the longitudinal edges of the sleeve and secured thereto by an adhesive. A heat shrinkable sleeve with adhesive and/or patches to hold the longitudinal edges together during shrinking of the sleeve are described in US Patent Nos 3,770,556; 3,957,052; and UK Patent No 2,056,192, the disclosures of which are incorporated herein by reference.

Heat shrinkable tubular and wraparound sleeves are well known in the art. Typically they comprise a tube or sheet of cross-linked polymeric material formed by expanding and cross-linking the tube or sheet under conditions such that it remains in the expanded condition until it is heated at which time it shrinks toward its unexpanded state. Such articles can also be made from materials already in the expanded state, for example, stretched and cross-linked tape spirally wrapped around a mandrel to form a shrinkable tubular article. The tubular article can be slit to form a shrinkable wraparound sleeve. Typically such articles are made of polyethylene but as one skilled in the art is well aware, other polymeric materials can be employed. It is not critical in the practice of this invention which material is used in the heat shrinkable sleeves utilized in preparing the cable block.

- 7 -                                    MP0145307

Recoverable sleeves which recover by methods other than
by heat shrinking are also well known.  For example, US
Patent Nos 4,070,746; 4,135,553; 4,179,320; 4,287,012;
and 4,338,970, each disclose recoverable articles.  The
recoverable article comprises an elastomer member held
in an expanded condition by an outer restraining means.
The elastomeric member is bonded to the outer restraint.
In use, the article is positioned around a substrate
to be covered and the elastomer member is released from
the restraint.  Due to the elastic properties of the
expanded elastomeric member, it will then recover (or
shrink) toward its unexpanded configuration and into
contact with the substrate.

In US 4,135,553, the elastomeric member is released from
the restraint by applying a solvent which weakens the
adhesive bond between the members.  In US 4,179,320, the
elastomeric member is released from the restraint by
peeling strips of the restraining means from the elastomer
member.  In US 4,338,970, the elastomeric layer is
released by breaking or segmenting the restraint and
removing the pieces or segments from the elastomer
member thereby allowing it to recover to its unexpanded
configuration.

Following installation of the first recoverable sleeve,
the outer conductors are arranged circumferentially
around the first sleeve.  The step of applying adhesive
or gel between and around the individual conductors is
repeated for the outer conductors.  A second recoverable
sleeve is positioned around the outer conductors and
adhesive or gel and is concentric with the first sleeve.
Heat is applied to shrink the sleeve (where appropriate)
and melt the adhesive causing it to flow and fill all
voids between the first and second sleeves.  Solvent may
also be applied in the case of solvent recoverable
sleeve.

The procedure can be repeated until all conductors of the multiconductor cable are enclosed between concentric sleeves with adhesive filling the entire space around the conductors between adjacent concentric sleeves. Where the conductors are arranged in concentric layers, a separate sleeve may be used for each layer, or for two, or more, adjacent layers. The outermost sleeve can be of sufficient length so that it shrinks into contact with and seals to the outer protective jacket of the cable. Additional hot-melt adhesive or gel can be applied to the jacket or to the sleeve to effect such a seal. Alternatively, another recoverable sleeve long enough to enclose the entire cable block can be used to enclose the cable block and seal to the cable jacket to prevent ingress of moisture, gases, etc.

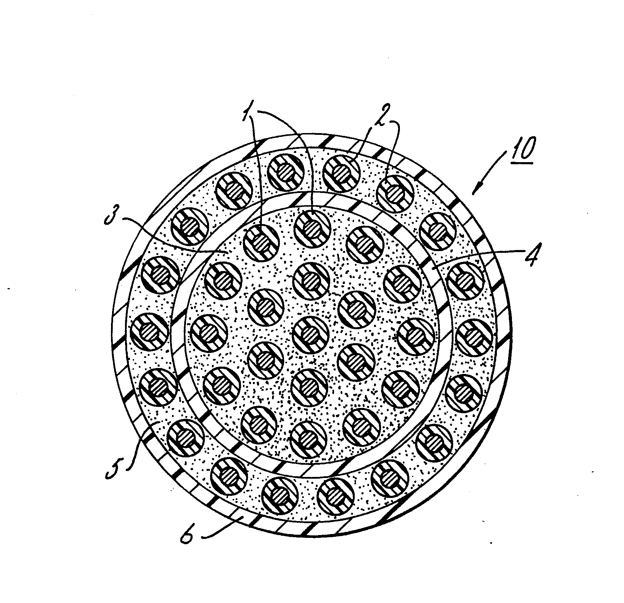

A cross section of a cable block in a cable having a plurality of conductors, made in accordance with the method of the present invention, is shown in the accompanying drawing, by way of example.

The cable comprises a control cable having thirty-seven No 12 gauge conductors each having a surrounding layer of polymeric insulating material. In the drawing, nineteen inner conductors 1 in the centre region of the cable have been separated from the eighteen outer conductors 2. Adhesive 3 surrounds each of the conductors in the centre region and a heat recoverable tubular sleeve 4 surrounds the conductors 1 and the adhesive 3. The eighteen outer conductors 2 are arranged circumferentially around the sleeve 4 and are surrounded by adhesive or gel 5. A tubular sleeve 6 surrounds the entire assembly. The resulting cable block is gas-tight and prevents undesired gaseous substances from migrating along the cable core.

The cable block illustrated in the drawing was prepared by removing the outer sheath from a section of the end of the cable. The outer eighteen conductors 2 were separated from the inner conductors 1 and bent outwardly permitting access to the individual inner conductors. A split cylindrical tube or profile of hot-melt adhesive or gel about 3.75 cms (1 1/2 inches) long was positioned around each of the nineteen conductors. The adhesive used in these sleeves was an ethylene-vinyl acetate based adhesive containing butyl rubber. The adhesive had a melt flow index at 90°C of about 7 decigrams per minute and at 80°C of about 2 decigrams per minute. A heat shrinkable polymeric sleeve 4 of cross-linked polyethylene was then positioned over the inner conductors. The heat shrinkable sleeve was heated with a torch, care being taken not to subject the outer conductors to the flame. The heat caused the sleeve to shrink down onto the inner conductors and caused the adhesive to melt and flow filling all the voids between the inner conductors. The sleeve around the inner conductors was permitted to cool.

The outer eighteen conductors 2 were bent back to their original position and arranged around the circumference of the polymeric sleeve 4. An adhesive sleeve was wrapped around each of these conductors and a second heat shrinkable polymeric sleeve 6 was positioned over the outer conductors 2. The length of the second polymeric sleeve was such that it extended over the outer sheath of the cable. Heat was then applied to cause this outer heat shrink sleeve to shrink into contact with underlying cable components and to cause the outer adhesive to melt and flow to fill all the voids around the outer conductors.

The sample was tested at 80°C under an air pressure equivalent to 50 cms (20 inches) of water maintained under these conditions for 24 hours. There was no measurable air leakage through the cable block.

The adhesives were tested by melt flow index procedures ASTM D-1238-73 at both 80°C and 90°C. For the samples tested at 80°C, 68 samples were used by cutting strips from 50 mil slabs of material pressed at 20,000 psig at 150°C for 10 min. The preheat time was 8 minutes with 2160g load, and the load during testing was 2160g. For the samples at 90°C the same procedure was used except the samples weighted - 5.5g and the preheat time was 5 minutes with a 325g load then 1 minute with a 2160g load.

Claims

1. A method of forming a substantially gas-tight block in a cable having a plurality of conductors, which method comprises: separating a plurality of conductors in an inner region of the cable from conductors in an outer region of the cable; applying a hot-melt adhesive or a gel around each of the inner conductors; installing a first recoverable polymeric sleeve around the inner conductors; arranging the outer conductors around the circumference of the first polymeric sleeve; applying a hot-melt adhesive or a gel around each of the outer conductors; and installing a second recoverable polymeric sleeve around the outer conductors concentric with the first polymeric sleeve.

2. A method in accordance with Claim I wherein said hot-melt adhesive has a melt flow index at 90°C of greater than about 6.5 decigrams per minute.

3. A method in accordance with Claim 1 or 2, wherein said hot-melt adhesive has a melt flow index at 80°C of less that about 3 decigrams per minute.

4. A method in accordance with any preceding Claim, wherein said hot-melt adhesive has a melt flow index at 90°C of between about 6.5 and about 15 decigrams per minute and at 80°C of between about 1.2 and about 3.0 decigrams per minute.

5. A method in accordance with any preceding Claim, wherein said hot-melt adhesive is an ethylene-vinyl acetate based hot-melt adhesive.

6.    A method in accordance with any preceding Claim,
wherein said hot-melt adhesive or gel is applied around
each of the conductors in the form of a slit tube of
adhesive or gel.